# EUROPEAN PATENT APPLICATION

(11) **EP 4 664 709 A1**
(43) Date of publication of application: **17.12.2025**
(21) Application number: 24777526.5
(22) Date of filing: 05.02.2024
(51) Int. Cl.: H02J 3/38

(54) **INVERTER SYSTEM, CLUSTER AND PHOTOVOLTAIC SYSTEM**

(30) Priority: 24.03.2023 CN 202310333030
(71) Applicant: Huawei Digital Power Technologies Co., Ltd., Shenzhen, Guangdong 518043 (CN)
(72) Inventor: SHUI, Wei, Shenzhen, Guangdong 518043 (CN)
(74) Representative: Gill Jennings & Every LLP
(86) International application number: PCT/CN2024/075930
(87) International publication number: WO 2024/198732

(57) **Abstract**

This application provides an inverter system, a cluster, and a photovoltaic system. The inverter system includes a plurality of inverters and a communication apparatus. The inverter is configured to convert a direct current into an alternating current. A first inverter is connected to at least one second inverter through a power line, and the first inverter communicates with the second inverter through the power line based on a first protocol stack. The communication apparatus is connected to the first inverter. A second protocol stack and a third protocol stack are included. The communication apparatus is configured to communicate with the first inverter based on the second protocol stack, and communicate with a management device based on the third protocol stack. According to the inverter system, the cluster, and the photovoltaic system provided in this application, a power line can serve as a communication medium between inverters, so that an installation location of a communication apparatus in a communication system is more flexible, construction and cabling costs and manual delivery costs are reduced, and stability and flexibility of the communication system are improved.

## Description

This application claims priority to Chinese Patent Application No. 202310333030.3, filed with the China National Intellectual Property Administration on March 24, 2023 and entitled "INVERTER SYSTEM, CLUSTER, AND PHOTOVOLTAIC SYSTEM", which is incorporated herein by reference in its entirety.

### TECHNICAL FIELD

This application relates to the communication field, and more specifically, to an inverter system, a cluster, and a photovoltaic system.

### BACKGROUND

In a photovoltaic station system, a photovoltaic panel is usually used to convert solar energy into a direct current, and the direct current power is converted into an alternating current by an inverter. One photovoltaic power station system usually includes a plurality of inverters. Each inverter may be connected to a plurality of photovoltaic panels based on parameter performance of the inverter. The plurality of inverters converge converted alternating currents to a grid-connected cabinet through a power line. The grid-connected cabinet leads a converged alternating current to a load or connects the converged alternating current to a power grid through a transformer.

To facilitate management and unified scheduling of the photovoltaic power station system, a data collector is usually additionally configured at a location of each grid-connected cabinet, and media access control addresses (Media Access Control Address, MAC) of all inverters connected to the grid-connected cabinet are added to a trustlist of the data collector. The data collector centrally manages inverters in the trustlist, and centrally manages and schedules a voltage, a current, a power, device status information, and the like of a photovoltaic power station.

However, communication deployment of the data collector is difficult. Usually, both the grid-connected cabinet and the data collector are deployed in a power distribution equipment room. Most power distribution equipment rooms are usually located in a place such as a basement. In addition, MAC addresses of inverter devices that are newly delivered from a factory need to be queried and configured one by one and cannot be directly obtained. Therefore, when the data collector is used to manage and control the inverter in a wireless communication manner, there are problems such as poor reception, a limited communication manner, and inability to directly obtain a MAC address, and there are problems such as high hardware costs and high construction and delivery costs.

### SUMMARY

This application provides an inverter system, a cluster, and a photovoltaic system. A power line can serve as a communication medium between inverters, so that an installation location of a communication apparatus in a communication system is more flexible, construction and cabling costs and manual delivery costs are reduced, and stability and flexibility of the communication system are improved.

According to a first aspect, an inverter system is provided. The inverter system includes a plurality of inverters and a communication apparatus. The plurality of inverters are configured to convert a direct current into an alternating current. A first inverter is connected to at least one second inverter through a power line, and the first inverter communicates with the second inverter through the power line based on a first protocol stack. The communication apparatus is connected to the first inverter, and the communication apparatus is configured to: communicate with the first inverter based on a second protocol stack, and communicate with a management device based on a third protocol stack.

Based on this technical solution, an existing power line serves as a communication medium between inverters, to reduce construction and cabling costs, and improve delivery efficiency. In addition, the communication apparatus may be installed near an inverter with few obstacles and a high geographical location, to reduce obstacles of signal transmission, and improve stability and construction convenience of the communication system. The communication apparatus may communicate with the first inverter based on the second protocol stack, and communicate with the management device based on the third protocol stack. A plurality of communication manners may be used in the entire inverter system, to improve flexibility of the communication system. A communication effect of the inverter system is ensured by using a communication protocol that is most suitable for an actual environment.

With reference to the first aspect, in some implementations of the first aspect, the first inverter is a communication primary device in the inverter system in which the first inverter is located, and the second inverter is a communication secondary device in the inverter system in which the second inverter is located. The communication apparatus is specifically configured for communication between the inverter system and a communication primary device in another inverter system; and/or the communication apparatus is specifically configured for communication between the communication primary device and the management device.

Based on this technical solution, the first inverter is configured as a communication primary device in the communication system, the second inverter is configured as a communication secondary device in the communication system, and the communication apparatus is configured for communication between communication primary devices and communication between the communication primary device and the management device. Communication between inverter systems is implemented by using an existing power line and the communication apparatus, to reduce construction and cabling costs and delivery costs, and improve stability and construction convenience of the communication system. A plurality of communication manners may be used in the entire inverter system, to improve flexibility of the communication system. A communication effect of the inverter system is ensured by using a communication protocol that is most suitable for an actual environment.

It should be understood that the first inverter and the second inverter may be a same hardware device, and are configured to be in different communication modes on a delivery site. Alternatively, the first inverter and the second inverter may be different hardware devices, and are delivered from a factory as communication devices with different functions at delivery. This is not specifically limited in this application.

With reference to the first aspect, in some implementations of the first aspect, the first inverter and the second inverter are configured as communication secondary devices when the first inverter and the second inverter are automatically started upon startup. The first inverter receives a first configuration message sent by the communication apparatus. The first configuration message indicates to switch from the communication secondary device to the communication primary device. The first inverter switches from the communication secondary device to the communication primary device based on the first configuration message.

Based on this technical solution, the first inverter and the second inverter are configured as communication secondary devices when the first inverter and the second inverter are automatically started upon startup, the communication apparatus is connected to the first inverter and sends the first configuration message to the first inverter, and the first inverter switches from a communication secondary device mode to a communication primary device mode by receiving the first configuration message sent by the communication apparatus. The communication apparatus may choose to be connected to an inverter with a high geographical location and few surrounding obstacles, and the inverter is configured as a communication primary device, to reduce construction and cabling costs and delivery costs, and improve stability and construction convenience of the communication system.

With reference to the first aspect, in some implementations of the first aspect, the first inverter switches from the communication primary device to the communication secondary device based on a second configuration message.

Based on this technical solution, the first inverter configured as a communication primary device may further switch from the communication primary device mode to the communication secondary device mode by receiving a second configuration message sent by the communication apparatus; or the communication apparatus may be disconnected from the first inverter, and is reconnected to another inverter, and the another inverter is configured as a communication primary device. This reduces construction and cabling costs and delivery costs of the entire inverter system, and improves stability and construction convenience of the communication system.

It should be understood that the first inverter and the second inverter are merely example references, and are not intended to constitute a functional limitation. The first inverter and the second inverter may be a same hardware device or may be different hardware devices. This is not specifically limited in this application.

With reference to the first aspect, in some implementations of the first aspect, the inverter system further includes a grid-connected apparatus; and the first inverter and the second inverter communicate with each other through the grid-connected apparatus based on the first protocol stack.

With reference to the first aspect, in some implementations of the first aspect, the inverter is configured to store a first mapping relationship. The first mapping relationship indicates a correspondence between a product serial number SN of each inverter and a media access control MAC address of the inverter. The first inverter is configured to: obtain a first SN of the second inverter; and determine, based on the first mapping relationship, a first MAC address corresponding to the first SN; and the first inverter is configured to add the first MAC address to a first address list.

Based on this technical solution, the first mapping relationship exists between the product serial number SN of each inverter and the media access control MAC address of the inverter, and the first mapping relationship is stored in the inverter. The first inverter obtains SNs of all connected second inverters, obtains corresponding MAC addresses based on the first mapping relationship, and adds the MAC addresses to an address list. A corresponding MAC address list can be generated by obtaining an SN list on a machine body on the delivery site, to shorten a delivery period, reduce delivery costs, and reduce address costs of a manufacturer.

With reference to the first aspect, in some implementations of the first aspect, the first inverter is configured to obtain first information. The first information indicates permission of the second inverter. The first inverter is further configured to add the first MAC address to the first address list. The first inverter adds the first MAC address to the first address list when determining that the permission of the second inverter meets a permission condition corresponding to the first address list.

Based on this technical solution, before adding a MAC address of the second inverter to the address list, the first inverter further needs to obtain first information to verify the permission of the second inverter, and add, to the first address list, a MAC address list of a second inverter that meets permission. This reduces problems that networking of the communication system fails and the inverter cannot access a network, and improves stability of the communication system.

According to a second aspect, an inverter system cluster is provided. The inverter system cluster includes a management device and the inverter system in the first aspect or the implementations of the first aspect. The management device is configured to communicate with a communication apparatus in the inverter system based on a third protocol stack.

Based on this technical solution, between a communication primary device and a communication secondary device in the inverter system, a power line serves as a communication medium, and communication is performed based on a first protocol stack. In the inverter system cluster, the management device communicates with a communication apparatus in each inverter system based on the third protocol stack, and the communication apparatus in each inverter system communicates with a connected communication primary device based on a second protocol stack. The management device is used to centrally manage and schedule each inverter system, to facilitate data exchange between the management device and the inverter system cluster, to receive scheduling and control instructions, or the like of a user.

According to a third aspect, a photovoltaic system is provided. The photovoltaic system includes a power generation apparatus and the inverter system cluster in the second aspect or the implementations of the second aspect. A photovoltaic power generation apparatus is configured to convert luminous energy into direct current energy.

Based on this technical solution, in the photovoltaic system, a management device may be used to obtain information such as power of each inverter system cluster and/or each inverter system and/or each inverter, and perform scheduling control on a separate system and/or inverter, to facilitate data exchange between the management device and the photovoltaic system, to receive a scheduling and control instructions, or the like of a user.

According to a fourth aspect, an address list generation method is provided. The method includes: obtaining a first mapping relationship. The first mapping relationship indicates a correspondence between a plurality of product serial numbers SNs and a plurality of media access control MAC addresses. The method further includes: obtaining a first SN of a first device; determining a first MAC address corresponding to the first SN based on the first mapping relationship; and adding the first MAC address to a first address list.

Based on this technical solution, a first mapping relationship exists between each product serial number SN and a media access control MAC address of an inverter. Based on the first mapping relationship, a corresponding product MAC address list may be generated by obtaining a plurality of product SN lists, and the MAC address list is added to configuration information. A teaching assistant may generate a corresponding MAC address list by obtaining an SN list on a machine body on a project delivery site, to shorten a delivery period, reduce delivery costs, and reduce address costs of a manufacturer.

With reference to the fourth aspect, in some implementations of the fourth aspect, the method further includes: obtaining a first SN list of a first device cluster; determining a first MAC address list corresponding to the first SN list based on the first mapping relationship; and adding the first MAC address list to the first address list.

Based on this technical solution, a first mapping relationship exists between each product serial number SN and a media access control MAC address of the inverter. Based on the first mapping relationship, a product MAC address list of a corresponding cluster device may be generated by obtaining an SN list of the entire device cluster, and the MAC address list is added to the configuration information. A teaching assistant may generate a corresponding MAC address list by obtaining an SN list on a machine body on a project delivery site, to shorten a delivery period, reduce delivery costs, and reduce address costs of a manufacturer.

With reference to the fourth aspect, in some implementations of the fourth aspect, the method further includes: obtaining first information, where the first information indicates permission of the first device; and adding the first MAC address to the first address list. The first MAC address is added to the first address list when it is determined that the permission of the first device meets a permission condition corresponding to the first address list.

Based on this technical solution, before a MAC address of a device is added to an address list, the first information further needs to be obtained to verify permission of the device, and a MAC address list of a first device that meets permission is added to the first address list. This reduces problems that networking of the communication system fails and the device cannot access a network, and improves stability of the communication system.

With reference to the fourth aspect, in some implementations of the fourth aspect, the method further includes: obtaining first information, where the first information indicates permission of the first device cluster; and adding the first MAC address list to the first address list. The first MAC address list is added to the first address list when it is determined that the permission of the first device cluster meets a permission condition corresponding to the first address list.

Based on this technical solution, before a MAC address of a device cluster is added to an address list, the first information further needs to be obtained to verify permission of the device cluster, and a MAC address list of a first device cluster that meets permission is added to the first address list. This reduces problems that networking of the communication system fails and the device cluster cannot access a network, and improves stability of the communication system.

With reference to the fourth aspect, in some implementations of the fourth aspect, the method is performed in an inverter system, the first device is an inverter, the first mapping relationship is stored in the inverter, and/or the first mapping relationship is stored in a communication apparatus.

Based on this technical solution, in the inverter system, the first mapping relationship exists between the product serial number SN of each inverter and the media access control MAC address of the inverter, and the first mapping relationship is stored in the inverter and/or the communication apparatus. The first inverter obtains an SN of a connected inverter, obtains a corresponding MAC address based on the first mapping relationship, and adds the MAC address to an address list. A corresponding MAC address list can be generated by obtaining an SN list on a machine body on the delivery site, to shorten a delivery period, reduce delivery costs, and reduce address costs of a manufacturer.

According to a fifth aspect, a communication method for an inverter system is provided. The method includes: A first inverter is connected to at least one second inverter through a power line, and the first inverter communicates with the second inverter through the power line based on a first protocol stack. The first inverter communicates with a communication apparatus based on a second protocol stack, and the communication apparatus communicates with a management device based on a third protocol stack. The communication apparatus is connected to the first inverter.

Based on this technical solution, an existing power line serves as a communication medium between inverters, to reduce construction and cabling costs, and improve delivery efficiency. In addition, the communication apparatus may be installed near an inverter with few obstacles and a high geographical location, to reduce obstacles of signal transmission, and improve stability and construction convenience of the communication system. The communication apparatus may communicate with the first inverter based on the second protocol stack, and communicate with the management device based on the third protocol stack. A plurality of communication manners may be used in the entire inverter system, to improve flexibility of the communication system. A communication effect of the inverter system is ensured by using a communication protocol that is most suitable for an actual environment.

With reference to the fifth aspect, in some implementations of the fifth aspect, the first inverter is a communication primary device in the inverter system in which the first inverter is located, and the second inverter is a communication secondary device in the inverter system in which the second inverter is located. The communication apparatus is specifically configured for communication between the inverter system and a communication primary device in another inverter system; and/or the communication apparatus is specifically configured for communication between the communication primary device and the management device.

Based on this technical solution, the first inverter is configured as a communication primary device in the communication system, the second inverter is configured as a communication secondary device in the communication system, and the communication apparatus is configured for communication between communication primary devices and communication between the communication primary device and the management device. Communication between inverter systems is implemented by using an existing power line and the communication apparatus, to reduce construction and cabling costs and delivery costs, and improve stability and construction convenience of the communication system. A plurality of communication manners may be used in the entire inverter system, to improve flexibility of the communication system. A communication effect of the inverter system is ensured by using a communication protocol that is most suitable for an actual environment.

It should be understood that the first inverter and the second inverter may be a same hardware device, and are configured to be in different communication modes on a delivery site. Alternatively, the first inverter and the second inverter may be different hardware devices, and are delivered from a factory as communication devices with different functions at delivery. This is not specifically limited in this application.

With reference to the fifth aspect, in some implementations of the fifth aspect, the first inverter and the second inverter are configured as communication secondary devices when the first inverter and the second inverter are automatically started upon startup. The first inverter receives a first configuration message sent by the communication apparatus. The first configuration message indicates to switch from the communication secondary device to the communication primary device. The first inverter switches from the communication secondary device to the communication primary device based on the first configuration message.

Based on this technical solution, the first inverter and the second inverter are configured as communication secondary devices when the first inverter and the second inverter are automatically started upon startup, the communication apparatus is connected to the first inverter and sends the first configuration message to the first inverter, and the first inverter switches from a communication secondary device mode to a communication primary device mode by receiving the first configuration message sent by the communication apparatus. The communication apparatus may choose to be connected to an inverter with a high geographical location and few surrounding obstacles, and the inverter is configured as a communication primary device, to reduce construction and cabling costs and delivery costs, and improve stability and construction convenience of the communication system.

With reference to the fifth aspect, in some implementations of the fifth aspect, the first inverter switches from the communication primary device to the communication secondary device based on a second configuration message.

Based on this technical solution, the first inverter configured as a communication primary device may further switch from the communication primary device mode to the communication secondary device mode by receiving a second configuration message sent by the communication apparatus; or the communication apparatus may be disconnected from the first inverter, and is reconnected to another inverter, and the another inverter is configured as a communication primary device. This reduces construction and cabling costs and delivery costs of the entire inverter system, and improves stability and construction convenience of the communication system.

It should be understood that the first inverter and the second inverter are merely example references, and are not intended to constitute a functional limitation. The first inverter and the second inverter may be a same hardware device or may be different hardware devices. This is not specifically limited in this application.

With reference to the fifth aspect, in some implementations of the fifth aspect, a power communication system further includes a grid-connected apparatus; and the first inverter and the second inverter communicate with each other through the grid-connected apparatus based on the first protocol stack.

With reference to the fifth aspect, in some implementations of the fifth aspect, a first mapping relationship is obtained. The first mapping relationship indicates a correspondence between a product serial number SN of each inverter and a media access control MAC address of the inverter. A first SN of the second inverter is obtained; and a first MAC address corresponding to the first SN is determined based on the first mapping relationship; and the first MAC address is added to a first address list.

Based on this technical solution, a first mapping relationship exists between a product serial number SN of each inverter and a media access control MAC address of the inverter. An SN of a connected inverter is obtained, a corresponding MAC address is obtained based on the first mapping relationship, and the MAC address is added to an address list. A corresponding MAC address list can be generated by obtaining an SN list on a machine body on the delivery site, to shorten a delivery period, reduce delivery costs, and reduce address costs of a manufacturer.

With reference to the fifth aspect, in some implementations of the fifth aspect, first information is obtained. The first information indicates permission of the second inverter. The first inverter is further configured to add the first MAC address to the first address list. The first inverter adds the first MAC address to the first address list when determining that the permission of the second inverter meets a permission condition corresponding to the first address list.

Based on this technical solution, before adding a MAC address of the second inverter to the address list, the first inverter further needs to obtain first information to verify the permission of the second inverter, and add, to the first address list, a MAC address list of a second inverter that meets permission. This reduces problems that networking of the communication system fails and the inverter cannot access a network, and improves stability of the communication system.

### BRIEF DESCRIPTION OF DRAWINGS

FIG. 1 is a diagram of a photovoltaic power generation system according to an embodiment of this application;
FIG. 2 is a diagram of a trustlist generation method according to an embodiment of this application;
FIG. 3 is a diagram of a possible power communication system according to an embodiment of this application;
FIG. 4 is a diagram of a possible power communication system cluster according to an embodiment of this application;
FIG. 5 is a diagram of a possible photovoltaic system according to an embodiment of this application; and
FIG. 6 is a diagram of a method for quickly generating a MAC address according to an embodiment of this application.

### DESCRIPTION OF EMBODIMENTS

The following describes technical solutions of this application with reference to accompanying drawings.

A management device in embodiments of this application may be user equipment, an access terminal, a subscriber unit, a subscriber station, a mobile station, a remote station, a remote terminal, a mobile device, a user terminal, a terminal, a wireless communication device, a user agent, a user apparatus, or the like. The management device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal management device in a future 5G network, a terminal management device in a future evolved public land mobile network (public land mobile network, PLMN), or the like. This is not limited in embodiments of this application.

The following describes embodiments of this application in detail. Examples of embodiments of this application are shown in accompanying drawings. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

The terms "first", "second", "third", "fourth", and the like (if any) in this application are intended to distinguish between similar objects but do not necessarily indicate a specific order or sequence. It should be understood that the data termed in such a way are interchangeable in a proper case, so that embodiments of this application described herein can be implemented in an order other than the order illustrated or described herein.

Unless otherwise defined, a technical term or scientific data used in this application shall have a general meaning understood by a person of ordinary skill in the technical field of this application.

To make technical problems resolved, technical solutions used, and technical effect achieved in this application clearer, the following further describes the technical solutions in embodiments of this application in detail with reference to the accompanying drawings. It is clear that the described embodiments are merely some rather than all of embodiments of this application.

It should be further understood that various implementations described in this specification may be implemented separately or in combination. This is not limited in embodiments of this application.

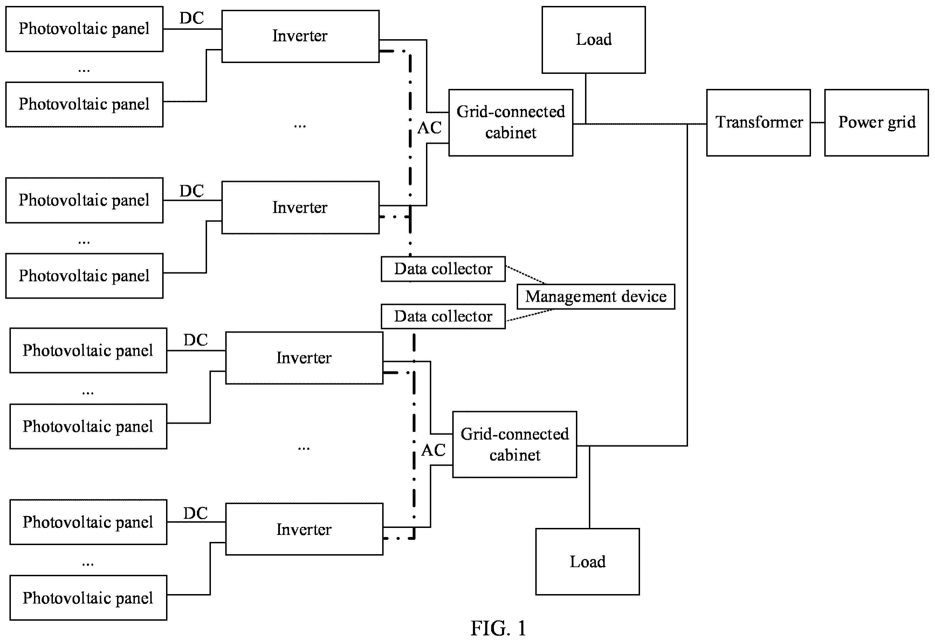

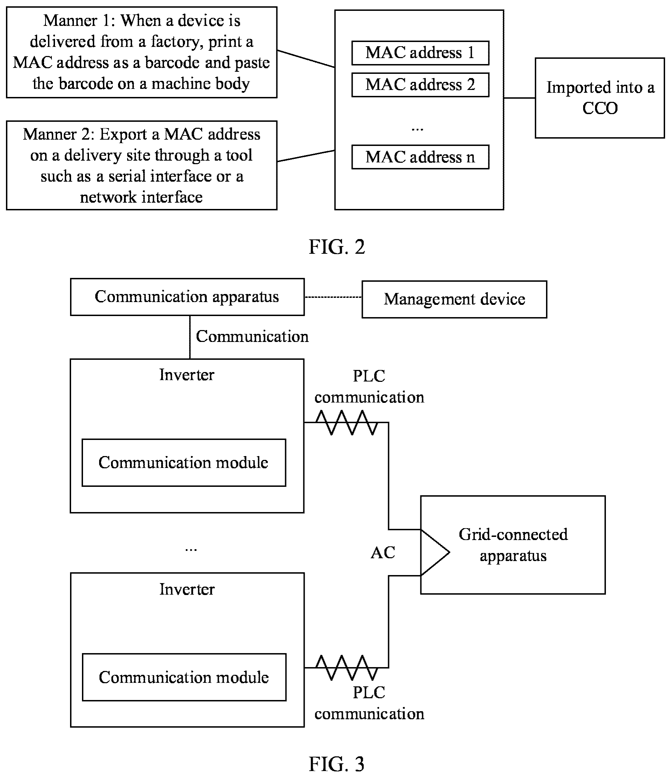

For ease of understanding, the following describes in detail technologies related to photovoltaic power station communication with reference to FIG. 1 and FIG. 2.

FIG. 1 is a diagram of a photovoltaic power generation system according to an embodiment of this application. FIG. 2 is a diagram of a trustlist generation method according to an embodiment of this application.

A power generation system of a photovoltaic power station usually includes a photovoltaic panel, an inverter, a grid-connected cabinet, and the like. The photovoltaic panel converts solar energy into electric energy, and outputs the electric energy to the inverter by using a direct current. The inverter converts the direct current into an alternating current, and outputs the alternating current to the grid-connected cabinet. The grid-connected cabinet converges alternating currents, and then transmits a converged alternating current to a load or to a power grid through a transformer. A communication system is usually added to a photovoltaic power station system to perform information exchange, to centrally monitor and control power generation information of the photovoltaic power station.

An objective of the communication system is to establish interaction communication between the inverter and a background management device. The background network management device can do work such as querying, setting, management, or the like for the inverter. To obtain information such as power of the inverter and perform scheduling control such as power adjustment on the inverter, a data collector needs to be additionally deployed at a location of each grid-connected cabinet, to centrally manage inverters connected to the grid-connected cabinet. The data collector and the inverter communicate with each other in a plurality of manners, for example, by using an RS485 cable, by using a power line, and in a wireless communication manner. One end of the data collector is connected to the inverter, and the other end is connected to an upper-layer management device to perform data exchange and present final data to a user; or to receive a scheduling control instruction from a user. The data collector may perform data exchange communication with the network management device in wired or wireless communication manner such as 4G, Wi-Fi, or FE.

Usually, a data collection device is installed in the grid-connected cabinet or is installed at a same geographical location as the grid-connected cabinet. Usually, the grid-connected cabinet is installed in a power distribution equipment room, and no Ethernet, or the like serves as an access point of the data collector. The data collector needs to be connected to each inverter through a cable, leading to increased construction and cabling costs. In addition, the power distribution equipment room is usually located at a location such as a basement. When the data collector communicates with the network management device in a wireless communication manner, or the like, a problem such as poor reception exists.

When the data collector is used to collect the information such as the power of the inverter, the data collector is a communication primary device (central coordinator, CCO) in the communication system, and the inverter is a communication secondary device (station, STA) in the communication system. A communication signal may be sent by the communication primary device and transmitted to the communication secondary device. The communication secondary device collects related information based on an instruction included in the received communication signal, and transmits the collected information to the communication primary device. If one photovoltaic power station system includes a plurality of grid-connected cabinets, a plurality of data collectors CCOs exist. In this case, the communication system is prone to crosstalk, and consequently, networking of the CCO fails and network access of the STA is in disorder. To cope with a problem that a plurality of CCOs are simultaneously networked and consequently, network access of the STA secondary node is in disorder, the CCO needs to support to set a trustlist, to ensure that each CCO can receive only a STA in the trustlist for networking and only a STA node in the trustlist can communicate with the CCO. Usually, the trustlist is usually set to collect media access control addresses (media access control address, MAC) of all STAs and import the collected MAC addresses to the CCO for storage.

There are mainly two existing MAC address import manners. One manner is as follows: Before a device such as the inverter is delivered from a factory, a MAC address allocated by a manufacturer is printed as a barcode and pasted on an outside of the device, and the MAC address on a device body is directly imported on a delivery site. The MAC address needs to be printed and pasted on the device body when being delivered from a factory. In this case, MAC addresses of all devices cannot be the same when being delivered from a factory. In this method, MAC address resources are occupied and wasted. The other MAC address import manner is as follows: After installation is completed on a delivery site, MAC addresses of all devices are exported by using a tool such as a serial interface or a network interface, and are all added to the CCO. In this manner, the MAC addresses of all the devices need to be collected one by one. In this way, an operation is cumbersome and redundant, increasing delivery time and delivery costs.

In view of this, this application provides a possible power communication system, a possible power communication system cluster, and a possible photovoltaic system, and provides a method for quickly generating a MAC address and quickly adding a STA to a CCO. The following describes embodiments of the present invention in detail according to FIG. 3 to FIG. 6.

FIG. 3 is a diagram of a possible power communication system according to an embodiment of this application.

A power line communication (power line communication, PLC) system is used in this embodiment provided in this application. The PLC communication system can reduce cabling costs, and a power line serves as a communication information transmission medium. In the PLC communication system, a communication primary device CCO and a communication secondary device STA communicate with each other through the power line. The CCO may send a PLC signal to the STA, and the STA may also send a PLC signal to the CCO. The CCO may receive the PLC signal from the STA, and the STA may also receive the PLC signal from the CCO.

In this embodiment provided in this application, each power communication system includes a plurality of inverters and a communication apparatus, and the inverters are connected to each other through a power line. A communication module is built in each inverter, and the communication module may perform wired communication based on a first protocol stack. The communication apparatus performs communication based on a second protocol stack, and the communication apparatus may be externally connected to the inverter. Each power communication system includes at least one communication apparatus. In a same power communication system, the communication module is specifically configured to perform communication between inverters. One end of the communication apparatus is connected to the inverter, and the other end is connected to a management device. The communication apparatus specifically communicates with the connected inverter based on the second protocol stack, and/or the communication apparatus specifically communicates with the connected management device based on a third protocol stack.

In each communication system, the inverter connected to the communication apparatus may be configured as a communication primary device CCO, and another inverter built with a communication module may be configured as a communication secondary device STA. All inverters may be connected to a grid-connected apparatus through a power line, and the inverters perform PLC communication through the power line and the grid-connected apparatus. In each communication system, at least one communication primary device CCO and one communication secondary device STA communicate with each other. The communication primary device CCO sends a first instruction to all communication secondary devices STAs in the system. After receiving the first instruction, the communication secondary device STA sends first information to the communication primary device CCO based on content of the first instruction.

Optionally, in a same communication system, communication modules may communicate with each other, and a communication apparatus may perform communication management and information exchange with another communication module in a cluster through a connected communication module.

Optionally, in a same communication system, a communication module may be configured for communication between inverters, and a communication apparatus may perform communication management and information exchange with another inverter in the system through a connected inverter.

Optionally, in a same communication system, a communication module may be configured for communication between secondary devices STAs, and a communication apparatus may perform communication management and information exchange with another communication secondary device STA in the system through the primary device CCO.

Optionally, in the power communication system, an inverter in which a communication module is built may be configured as a communication secondary device STA.

Optionally, in the power communication system, an inverter connected to a communication apparatus may be configured as a communication primary device CCO.

Optionally, a configuration message may be sent to the inverter through the communication module, to perform mode switching, and the inverter may be configured as a communication primary device CCO or a communication secondary device STA.

Optionally, an inverter in which a communication module is built may be configured to be in a communication secondary device STA mode by default when the inverter is automatically started upon startup. In a delivery process, switching between the primary device mode CCO and the secondary device mode STA may be performed based on an actual requirement. Specifically, switching may be performed for a running mode in a wireless or wired manner such as a management device, a mobile terminal, a serial interface cable, or software. This is not specifically limited in this application.

Optionally, two independent executable files of a primary device mode CCO and a secondary device mode STA may be built in the inverter in which a communication module is built. After a mode switching instruction is received, an executable file of a corresponding mode is invoked to perform mode switching.

Optionally, a same part in a configuration file of the primary device mode CCO and a configuration file of the secondary device mode STA may be built in the inverter in which a communication module is built, and different parts in the configuration files are respectively configured as a differential configuration file of the CCO and a differential configuration file of the STA. After a mode switching instruction is received, a differential configuration file of a corresponding mode is invoked to perform mode switching.

Optionally, an inverter in which a communication module is built may perform mode switching based on a remote configuration of the management device, by sending a mode switching instruction to the communication module through the communication apparatus by a terminal communication device such as a mobile phone, by sending a mode switching instruction through the communication module by a terminal communication device such as a mobile phone. This is not specifically limited in this application.

Specifically, the communication apparatus may be connected to any inverter in the communication system, and the connected inverter may be configured as a communication primary device or a communication secondary device. This is not specifically limited in this application.

Specifically, the communication module may include apparatuses such as a communication chip, a communication module, and a communication circuit. This is not specifically limited in this application.

Specifically, the communication apparatus may include apparatuses such as a communication stick, a collection stick, a data collector, and a communicator. This is not specifically limited in this application.

Specifically, the management device may include a device such as a data server, a desktop computer, a notebook computer, a mobile phone, or a mobile terminal. This is not specifically limited in this application.

Specifically, the grid-connected apparatus may include devices such as a grid-connected cabinet, a low-voltage power distribution cabinet, and a grid-connected box. This is not specifically limited in this application.

Specifically, the first protocol stack may include a PLC communication protocol, a high-speed power line carrier communication protocol (high-speed power line communications, HPLC), a high definition power line communication protocol (high definition power line communication, HD-PLC), and the like. This is not specifically limited in this application.

Specifically, the communication apparatus and the inverter may be connected to and communicate with each other in a wireless and/or wired communication manner such as a network cable, RS485, a serial interface cable, Wi-Fi, 4G, or 5G. The second protocol stack is a communication protocol used for a corresponding connection manner. This is not specifically limited in this application.

Specifically, the communication apparatus and the management device may be connected to and communicate with each other in a wireless and/or wired communication manner such as a network cable, RS485, a serial interface cable, Wi-Fi, 4G, or 5G. The third protocol stack is a communication protocol used for a corresponding connection manner. This is not specifically limited in this application.

Specifically, the first instruction may include functions such as a collection instruction, a scheduling instruction, an adjustment instruction, and an upload instruction, and may be customized based on an actual requirement of a user. This is not specifically limited in this application.

Specifically, first collection information may include information such as data information collected based on the first instruction, scheduling information generated based on the first instruction, and a data packet generated based on the first instruction, and may be customized based on the actual requirement of the user and specific content of the first instruction. This is not specifically limited in this application.

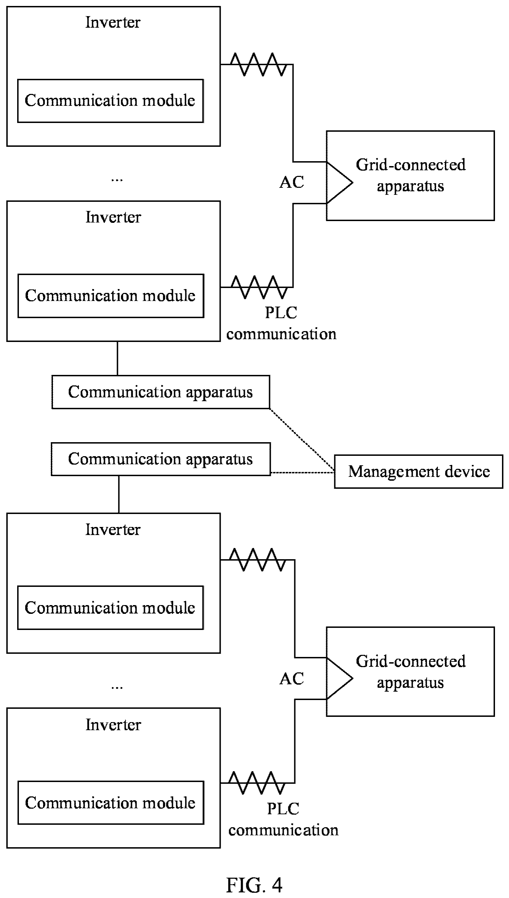

FIG. 4 is a diagram of a possible power communication system cluster according to an embodiment of this application.

In this embodiment provided in this application, each power communication system cluster includes at least one power communication system. All the power communication systems are centrally managed by using a management device, and the management device is connected to each communication system through the communication apparatus. Each power communication system includes at least one communication apparatus. The management device performs communication management with the power system by using the communication apparatus of each system. The management device communicates with the communication apparatus based on a second protocol stack. A communication module is built in an inverter in each power communication system. The inverter in each system is connected to a grid-connected apparatus in the system through a power line, inverters in a same communication system may communicate with each other through the grid-connected apparatus, and communication modules communicate with each other based on a first protocol stack.

In a same power communication system, each inverter may be configured as a communication secondary device STA, and at least one inverter connected to a communication module may be switched to a communication primary device CCO. Each communication primary device CCO may communicate with a secondary device STA in a same system. A first instruction sent by each communication primary device CCO based on a first protocol stack passes through a grid-connected apparatus and then is sent to the communication secondary device STA. First information uploaded by the secondary device STA passes through the grid-connected apparatus and then is sent to the primary device CCO.

The power communication system cluster includes at least one power communication system, and may communicate with a different power communication system in the cluster by using the management device. The management device communicates with a communication primary device CCO in a different system based on a third protocol stack. The management device sends instruction information to a communication apparatus in a different power communication system based on the third protocol stack. The communication apparatus communicates with a connected inverter based on the second protocol stack and the received instruction information. The inverter connected to the communication apparatus may be configured as a communication primary device CCO in the communication system. An inverter serving as a CCO communicates, through a power line and the grid-connected apparatus, with a secondary device STA of an inverter connected to the grid-connected apparatus, and the inverter of the primary device CCO communicates with the inverter of the secondary device STA based on the first protocol stack and an instruction of the communication apparatus. After receiving the instruction information from the primary device CCO, the secondary device STA returns collected data information. The STA returns data to the CCO based on the first protocol stack. The inverter of the CCO returns collected data information of all STAs and data information of the inverter of the CCO to the communication apparatus based on the second protocol stack. After performing data processing work including but not limited to packaging and classification on received data information of the power system, the communication apparatus returns data of the power communication system to the management device based on the third protocol stack.

It should be understood that the possible power communication system cluster shown in FIG. 4 includes at least one power communication system, and the power communication system also needs to include all content and features of the possible power communication system shown in FIG. 3. Details are not described herein again.

Optionally, each power communication system cluster may be located in a same local area network, and a management device centrally schedules and monitors power communication systems in a same local area network. This is not specifically limited in this application.

Optionally, power communication systems in all power communication system clusters may be connected to a same management device through another network conversion device, and the management device performs central scheduling and monitoring. This is not specifically limited in this application.

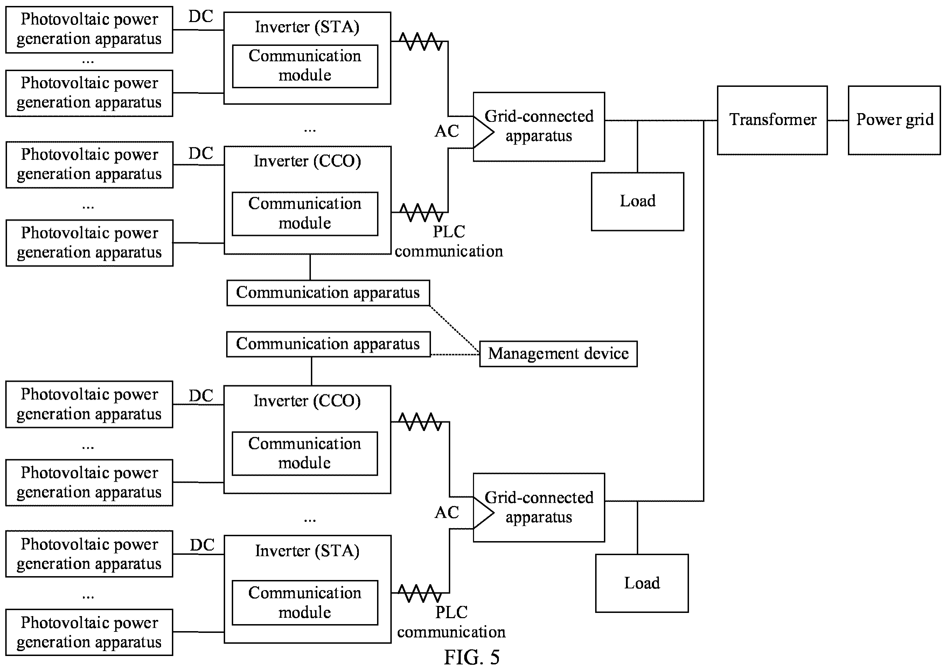

FIG. 5 is a diagram of a possible photovoltaic system according to an embodiment of this application.

In this embodiment provided in this application, the photovoltaic system includes a photovoltaic power generation apparatus and at least one power communication system cluster. The photovoltaic system may further include but is not limited to being connected to a load or being connected to a power grid through a transformer based on an actual use requirement. In a photovoltaic power generation system, a management device may centrally monitor and schedule each power system through a connected communication apparatus. Content of monitoring and scheduling includes but is not limited to a voltage, current, and power of a photovoltaic power generation apparatus connected to each inverter and internal status information of a device, and includes but is not limited to a total voltage, current, and power of each power communication system and internal status information of each device in the system, and includes but is not limited to a total voltage, current, and power of each power communication system cluster and internal status information of each device in the cluster.

It should be understood that the possible photovoltaic system shown in FIG. 5 includes at least one power communication system cluster, and the power communication system cluster also needs to include all content and features of the possible power communication system cluster shown in FIG. 4, and also needs to include all content and features of the possible power communication system shown in FIG. 3. Details are not described herein again.

Optionally, the photovoltaic system may adjust and set, by using the management device, a parameter of a connected communication system cluster based on a parameter and a requirement of an actually connected load or a power grid that needs to be connected. This is not specifically limited in this application.

Optionally, each photovoltaic system may be located in a same local area network, and the management device centrally schedules and monitors power communication system clusters in a same local area network. This is not specifically limited in this application.

Optionally, each power communication system cluster in each photovoltaic system may be connected to a same management device through another network conversion device, and the management device performs central scheduling and monitoring. This is not specifically limited in this application.

Specifically, the photovoltaic power generation apparatus includes but is not limited to a photovoltaic panel, a photovoltaic module, or another device and apparatus that may convert sunlight, or the like into electric energy. This is not specially limited in this application. A material, a shape, and the like of the photovoltaic power generation apparatus are not specially limited in this application.

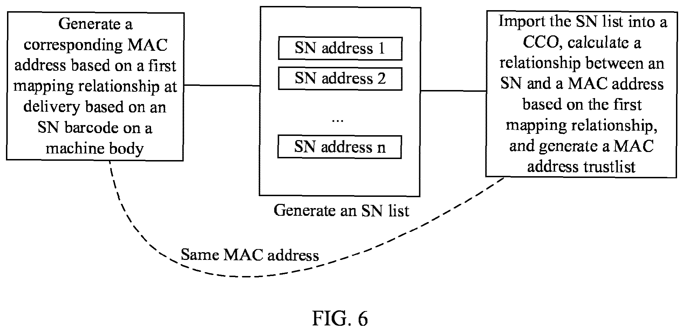

FIG. 6 is a diagram of a method for quickly generating a MAC address according to an embodiment of this application.

To ensure communication stability in a same power communication system and avoid problems that networking fails, the STA cannot access a network, network access of the STA is in disorder, and the like that are caused by signal crosstalk, a trustlist needs to be configured for a CCO, and a MAC address of a STA connected to the CCO is imported into the CCO for storage, and is stored as a trustlist, to ensure that only a STA in the trustlist can communicate with the CCO, improve communication stability, and reduce a problem that network access of the STA fails or the STA cannot be networked.

In this embodiment provided in this application, when a device is delivered from a factory, a MAC address corresponding to the device is generated based on a serial number (serial number, SN) on a machine body of the machine at delivery based on a first mapping relationship. In an actual use process, a manufacturer generates, at delivery, a corresponding MAC address based on the first mapping relationship and an SN barcode on the machine body, and allocates the MAC address; and on a device delivery site, generates an SN list based on an installed device, imports the SN list into the CCO, generates a MAC address list based on the first mapping relationship and the SN list, and finally generates a MAC address trustlist.

It should be understood that the method for quickly generating a MAC address provided in FIG. 6 may be applied to but is not limited to application scenarios such as the photovoltaic system, the power communication system cluster, and the power communication system provided in FIG. 3 to FIG. 5. The method for quickly generating a MAC address provided in FIG. 6 is applied to the systems provided in FIG. 3 to FIG. 5, and also needs to include all content and features of the systems shown in FIG. 3 to FIG. 5. Details are not repeated herein.

Optionally, a device SN may be exported by using a device purchase list, and the obtained SN list is imported into the CCO to parse out a MAC address corresponding to the device and add the MAC address to the trustlist. This is not specifically limited in this application.

Optionally, the SN list may be obtained by scanning the SN on a machine body by using a scanning device, and the obtained SN list is imported into the CCO to parse out a MAC address corresponding to the device and add the MAC address to the trustlist. This is not specifically limited in this application.

Optionally, an SN list of a machine may be obtained by using a near field communication technology (near field communication, NFC), and the obtained SN list is imported into the CCO to parse out a MAC address corresponding to the device and add the MAC address to the trustlist. This is not specifically limited in this application.

Optionally, the SN list may be obtained by manually entering an SN of the machine, and the obtained SN list is imported into the CCO to parse out a MAC address corresponding to the device and add the MAC address to the trustlist. This is not specifically limited in this application.

Specifically, the scanning device may include a device with a photographing function and a barcode identification function, for example, a scanner and a mobile phone terminal. This is not specifically limited in this application.

Optionally, a first mapping relationship may be integrated into an inverter and/or a communication apparatus. When the first mapping relationship is integrated into the inverter, a device SN list of a communication secondary device may be imported into an inverter configured as a communication primary device, and the inverter obtains a MAC address of the corresponding communication secondary device based on the first mapping relationship, and generates a trustlist. When the first mapping relationship is integrated into the communication apparatus, a device SN list of a communication secondary device may be imported into a communication apparatus connected to an inverter configured as a communication primary device, and the communication apparatus obtains a MAC address of the corresponding communication secondary device based on the first mapping relationship, and generates a trustlist. This is not specifically limited in this application.

Optionally, the first mapping relationship may be an encryption algorithm, and a corresponding MAC address is generated based on the SN of the machine. In devices delivered from a factory in different batches, there may be different encryption algorithms, so that different SNs correspond to a same MAC address. Because the devices delivered from a factory in different batches may access different local area networks in different regions or areas for use, even if a same MAC address is used, communication quality is not affected, networking disorder is not caused, or the like, and MAC address overheads can be further reduced. This is not specifically limited in this application.

In view of this, this application provides a possible power communication system, a possible power communication system cluster, and a possible photovoltaic system, and provides a method for quickly generating a MAC address and quickly adding a STA to a CCO. In the power communication system provided in this application, an arranged power line serves as a communication carrier cable, and no communication cable needs to be laid, to reduce construction and cabling costs, and shorten a delivery period. In addition, the communication apparatus provided in this application may be directly connected to any inverter in the communication system, and the connected inverter is configured as a communication primary device. The inverter is usually laid at a high point location such as a roof or an open area such as a ground on a first floor. The communication apparatus may select an inverter at a geographical location with a good communication signal for a connection configuration, to enhance signal stability between the communication apparatus and the management device, and reduce construction and cabling costs between the communication apparatus and the inverter. In addition, in the MAC address generation manner provided in this application, after a device is delivered from a factory, a MAC address may be flexibly allocated based on a use place and a use environment, to avoid MAC address occupation and waste, and shorten configuration time on a delivery site.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter system, comprising:
a plurality of inverters, configured to convert a direct current into an alternating current, wherein a first inverter is connected to at least one second inverter through a power line, and the first inverter communicates with the second inverter through the power line based on a first protocol stack; and
a communication apparatus, connected to the first inverter, wherein the communication apparatus is configured to: communicate with the first inverter based on a second protocol stack, and communicate with a management device based on a third protocol stack.

2. The inverter system according to claim 1, wherein
the first inverter is a communication primary device in the inverter system in which the first inverter is located;
the second inverter is a communication secondary device in the inverter system in which the second inverter is located;
the communication apparatus is specifically configured for communication between the inverter system and a communication primary device in another inverter system; and/or
the communication apparatus is specifically configured for communication between the communication primary device and the management device.

3. The inverter system according to claim 2, wherein
the first inverter and the second inverter are configured as the communication secondary devices when the first inverter and the second inverter are automatically started upon startup;
the first inverter receives a first configuration message sent by the communication apparatus, wherein the first configuration message indicates to switch from the communication secondary device to the communication primary device; and
the first inverter switches from the communication secondary device to the communication primary device based on the first configuration message.

4. The inverter system according to claim 3, wherein
the first inverter switches from the communication primary device to the communication secondary device based on a second configuration message.

5. The inverter system according to any one of claims 1 to 4, wherein
the inverter system further comprises a grid-connected apparatus; and
the first inverter and the second inverter communicate with each other through the grid-connected apparatus based on the first protocol stack.

6. The inverter system according to any one of claims 1 to 5, wherein
the inverter is configured to store a first mapping relationship, wherein the first mapping relationship indicates a correspondence between a product serial number SN of each inverter and a media access control MAC address of the inverter;
the first inverter is configured to obtain a first SN of the second inverter;
the first inverter is configured to determine, based on the first mapping relationship, a first MAC address corresponding to the first SN; and
the first inverter is configured to add the first MAC address to a first address list.

7. The inverter system according to claim 6, wherein
the first inverter is configured to obtain first information, wherein the first information indicates permission of the second inverter; and
that the first inverter is configured to add the first MAC address to the first address list comprises:
the first inverter is configured to add the first MAC address to the first address list when determining that the permission of the second inverter meets permission condition corresponding to the first address list.

8. An inverter system cluster, comprising a management device and at least one inverter system according to any one of claims 1 to 7, wherein
the management device is configured to communicate with a communication apparatus in the inverter system based on a third protocol stack.

9. A photovoltaic system, comprising a plurality of photovoltaic power generation apparatuses and at least one inverter system cluster according to claim 8, wherein
the photovoltaic power generation apparatus is configured to convert luminous energy into direct current energy.

10. An address list generation method, comprising:
obtaining a first mapping relationship, wherein the first mapping relationship indicates a correspondence between a plurality of product serial numbers SNs and a plurality of media access control MAC addresses;
obtaining a first SN of a first device;
determining a first MAC address corresponding to the first SN based on the first mapping relationship; and
adding the first MAC address to a first address list.

11. The method according to claim 10, comprising:
obtaining a first SN list of a first device cluster;
determining a first MAC address list corresponding to the first SN list based on the first mapping relationship; and
adding the first MAC address list to the first address list.

12. The method according to claim 10 or 11, comprising:
obtaining first information, wherein the first information indicates permission of the first device; and
the adding the first MAC address to the first address list comprises:
adding the first MAC address to the first address list when determining that the permission of the first device meets a permission condition corresponding to the first address list.

13. The method according to claim 11, comprising:
obtaining first information, wherein the first information indicates permission of the first device cluster; and
the adding the first MAC address list to the first address list comprises:
adding the first MAC address list to the first address list when determining that the permission of the first device cluster meets a permission condition corresponding to the first address list.

14. The method according to any one of claims 10 to 13, wherein
the method is performed in an inverter system, the first device is an inverter, the first mapping relationship is stored in the inverter, and/or the first mapping relationship is stored in a communication apparatus.
